# EUROPÄISCHE PATENTSCHRIFT

(11) **EP 3 407 048 B1**
(45) Veröffentlichungstag und Bekanntmachung des Hinweises auf die Patenterteilung: **13.05.2020**
(21) Anmeldenummer: 17172265.5
(22) Anmeldetag: 22.05.2017
(51) Int. Cl.: G01M 3/02, G01M 3/20, G01M 3/34

(54) **PRÜFLING-TROCKNUNGS- UND DICHTHEITSPRÜFVERFAHREN**
TEST SPECIMEN DRYING AND LEAK TEST METHOD
PROCÉDURE POUR CONTRÔLER L'ÉTANCHÉITÉ ET LE SÉCHAGE D'ÉCHANTILLON

(43) Veröffentlichungstag der Anmeldung: 28.11.2018
(73) Patentinhaber: Lüdolph Management GmbH, 27607 Geestland (DE)
(72) Erfinder: Lüdolph, Gerald, 27607 Langen (DE); Fuhrmann, Wolfgang, 28865 Lilienthal (DE)
(74) Vertreter: Hansen, Jochen

(56) Entgegenhaltungen:
- DE-A1- 4 445 883
- DE-U1- 9 212 270
- US-A1- 2010 018 293

## Beschreibung

Die Erfindung betrifft ein Prüfling-Trocknungs- und Dichtheitsprüfverfahren wenigstens eines nassen und / oder feuchten Prüflings, wobei für die Dichtheitsprüfung auf die Verwendung eines speziellen Testgases verzichtet wird und die Dichtheitsprüfung unter Umgebungsatmosphäre durchgeführt wird.

Im **Stand der Technik** werden typischerweise Druckmessverfahren und Druckdifferenzverfahren zur Dichtheitsprüfung eingesetzt, wobei hierzu in der Regel Luft als Testgas eingesetzt wird, wobei Luft in den Innenraum eines Prüflings oder in den Außenraum der Prüfkammer mit Druck eingebracht wird.

Ferner zeigt die DE 92 12 270 U1 eine Prüfkammer mit einer dem Anschluss an einer Lecksucher dienenden Verbindungsleitung, wobei der Verbindungsleitung und/oder Prüfkammer eine Heizeinrichtung zugeordnet ist.

Die DE 44 45 883 A1 beschreibt ein Verfahren zum Prüfen von Rohren o. dgl. aus Beton, Steinzeug, Guss o. dgl. auf Dichtheit mit Hilfe einer Vakuumprüf-Vorrichtung, in dem der Prüfling beidseitig abgedichtet und in ihm mittels einer angeschlossenen Vakuumpumpe ein Vakuum erzeugt wird, wobei während des Absaugens die in dem Prüfling noch vorhandene Restluft umgewälzt wird. Nach Erreichen des Endvakuums und eines stationären Gleichgewichts wird über eine vorgegebene Prüfzeit hinweg die Veränderung des Vakuums beobachtet und ein Rohr mit auf Undichtheit deutendem Abfall des Vakuums ausgesondert.

Beispielsweise ist aus der Druckschrift PCT PCT/DE2014/100156 eine Dichtheitsprüfanordnung sowie ein Dichtheitsprüfverfahren zur Prüfung eines Strukturbauteils oder einer geschlossenen Verpackung bzw. eines geschlossenen Objektes oder Bauteils mit einer auf Dichtheit zu prüfenden Wandung bekannt, aufweisend: eine Testkammer, in der während der Dichtheitsprüfung das Strukturbauteil oder die Verpackung, das geschlossene Objekt oder Bauteil angeordnet ist, einen Testgasraum, der auf einer ersten Seite der Wandung des Strukturbauteils und der Testkammer ausgebildet ist oder der dem Innenraum der Verpackung / des geschlossenen Objektes oder Bauteils entspricht, einen Prüfraum, der auf einer zweiten Seite der Wandung des Strukturbauteils und der Testkammer ausgebildet ist oder zwischen Wandung der Verpackung, des geschlossenen Objektes oder Bauteils und der Testkammer ausgebildet ist, eine Testgaszuführung zur Zuführung von Druckluft und / oder eines Testgases in den Testgasraum, eine Testgasmessanordnung zur Messung oder Detektion des Testgases in dem Prüfraum mit einem Sensorsystem und eine Prüfraum-Vakuumanordnung zur Evakuierung des Prüfraumes.

An dieser Stelle sei angemerkt, dass sich die diesseitige Erfindung ebenfalls auf derartige zu prüfende Objekte und Bauteile bezieht. Diesbezüglich wird Bezug auf die zuvor genannte im Stand der Technik bekannte Druckschrift der Anmelderin genommen.

Ferner sollen mit dem diesseits beschrieben Prüfling-Trocknungs- und Dichtheitsprüfverfahren sowie mit der entsprechenden -anordnung, auf der das Verfahren umgesetzt wird, Motorblöcke, Fässer, Räder, Verpackungen, Bauteile und/oder Verpackungen sowie Behältnisse im Allgemeinen, die eine dichte Wandung aufweisen bzw. sogar aufweisen müssen, auf Dichtheit geprüft werden, wobei diese zu prüfenden Prüflinge nass und / oder feucht sein können und dementsprechend vorher getrocknet werden müssen. Im Stand der Technik werden die zu prüfenden Prüflinge zunächst gereinigt und getrocknet, bevor diese einer Dichtheitsprüfung unterzogen werden.

Typischerweise werden Prüflinge auf Dichtheit geprüft, indem eine den Innenraum von der Außenwelt trennende Wandung auf Dichtheit überprüft wird. Hierzu einige Beispiele: Wandung eines Motorblockes, spätere Aufnahmefläche für einen Reifen eines Rades, Fass für die Lagerung von Flüssigkeiten, Verpackungen unterschiedlicher Art aus den unterschiedlichsten Materialien und dergleichen.

Die seitens der Erfinder/Anmelderin erkannten **Probleme im Stand der Technik** sind im Wesentlichen:
Seitens der Erfinder wurde erkannt, dass Flüssigkeiten Lecks in dem feuchten bzw. nassen Prüfling verblocken können, wobei diese heute in diesem Zustand von keiner Dichtheitsprüfmethode erkannt werden können und später undefiniert wieder aufgehen können und zu erheblichen Funktionsstörungen an u. U. lebenswichtigen bzw. sicherheitsrelevanten Komponenten und Baugruppen, z. B. in der KFZ-Industrie oder Medizintechnik, führen können.

Bisher müssen feuchte oder nasse Prüflinge zunächst aufwendig getrocknet und zudem inspiziert werden, bevor sie einer Dichtheitsprüfung zugeführt werden können, was zum einen dazu führt, dass ein kontinuierliches Prozessieren der Bauteile nicht möglich ist, und zum anderen das Trocknen mit einem erheblichen Prozessaufwand an sich verbunden ist, der zudem sehr zeitaufwendig ist.

Beispielsweise ist ein gefräster Motorblock, der im Anschluss an das Fräsen gewaschen wird, noch feucht bzw. sogar nass und enthält in der Regel im Motorblockinnenraum noch eine Restmenge an Wasser oder beispielsweise einer Bohrflüssigkeit von bis z.B. zu 10 ml. Diese Restfeuchte bzw. Restflüssigkeit würde bei einer Dichtheitsprüfung dazu führen, dass etwaig vorhandene Lecks innerhalb der auf Dichtheit zu prüfenden Motorblockwandung durch das Wasser verblockt werden können und so nicht detektierbar sind. Dies führt dazu, dass ein eigentlich nicht dichter Motorblock als in Ordnung eingestuft wird und beim späteren Betrieb aufgrund eines Lecks ausfällt, da das eigentlich zu detektierende Leck durch das Wasser verblockt war. Herkömmlich würde der Motorblock zunächst erwärmt, um diesen zu trocknen, und im Anschluss abgekühlt werden, so dass dieser dann mit einer herkömmlichen Differenzdruckmessung auf Dichtheit geprüft werden könnte. Dieser übliche Vorgang ist sehr aufwendig vom Handling, bedarf einer großen Hallenplatzfläche für die Vorrichtungen und einer enormen Menge Energie für das Trocknen als auch einen immensen Zeitbedarf.

Der Hauptnachteil der bisher im Stand der Technik bekannten Verfahren und Anordnungen ist das zwingende Hintereinander Ausführen von Trocknen und Prüfen auf Dichtheit. Es ist bisher nicht möglich nasse oder feuchte Prüflinge auf Dichtheit zu prüfen, da Flüssigkeit, nämlich insbesondere Wasser, während der Dichtheitsprüfung mögliche Lecks verblocken kann, da die Lecks durch die Flüssigkeit undurchlässig werden.

Weitere Nachteile sind:
- die Temperaturempfindlichkeit bei im Stand der Technik bekannten mit Druck arbeitenden Dichtheitsprüfverfahren,
- starke Abhängigkeit vom Prüflingsvolumen während der Dichtheitsprüfung, d.h. mit steigendem Prüflingsvolumen wird die Prüfzeit sehr groß,
- die zu prüfenden Teile bzw. Prüflinge müssten zur Vermeidung von Leckverblockungen gegen Druckänderungen über 1 bar formstabil sein, da mit höheren Drücken geprüft werden müsste, um etwaige Leckverblockungen durch Flüssigkeiten zu entfernen.
- die im Stand der Technik bekannten Testanlagen mit Testgasverwendung, beispielsweise Heliumanlagen, haben dabei den Nachteil einer möglichen Testgasverseuchung, die einen schwerwiegenden technischen Nachteil bedeutet.

Der vorliegenden Erfindung liegt die **Aufgabe** zugrunde, ein Prüfling-Trocknungs- und Dichtheitsprüfverfahren wenigstens eines nassen und / oder feuchten Prüflings anzugeben, mittels derer es möglich ist in einem gemeinsamen Arbeitsgang einen nassen und / oder feuchten Prüfling im Inneren, also dem Prüfraum, zunächst zu trocknen und im gleichen Arbeitsgang eine Dichtheitsprüfung durchzuführen.

Ferner sollen weiterhin noch die zuvor aufgezeigten Probleme ergänzend mit gelöst werden, nämlich temperaturunempfindliches arbeiten, Unabhängigkeit vom Prüfungsvolumen, innerhalb einer kurzen Prüfzeit messen können sowie weiterhin das Ausschließen der Gefahr einer Testgasverseuchung des Prüfraums.

Insbesondere sollen durch Flüssigkeiten / Wasser verblockte Lecks detektierbar sein.

**Gelöst** werden diese Aufgaben mit einem Prüfling-Trocknungs- und Dichtheitsprüfverfahren gemäß Hauptanspruch, nämlich:
Prüfling-Trocknungs- und Dichtheitsprüfverfahren zur Trocknung und anschließenden Dichtheitsprüfung wenigstens eines nassen und / oder feuchten Prüflings, wobei für die Dichtheitsprüfung auf die Verwendung eines speziellen Testgases verzichtet wird, die Dichtheitsprüfung unter Umgebungsatmosphäre durchgeführt wird und nach dem Abdichten des zu trocknenden und auf Dichtheit zu prüfenden Prüfraumes des Prüflings wenigstens folgende Schritte durchgeführt werden:
a) Erzeugen eines ersten Vakuumniveaus in dem zu prüfenden Prüfraum des Prüflings mit einer Evakuierungsanordnung
   und
   Halten dieses ersten Vakuumniveaus bei dem Verdampfungsdruck von Wasser oder einer zu entfernenden Flüssigkeit, so dass sich das in dem Prüfraum des zu prüfenden Prüflings befindende Wasser, Flüssigkeit und / oder Feuchtigkeit aufgrund des geringeren Druckes innerhalb des Prüfraumes verdampft und durch die Evakuierungsanordnung entfernt wird;
b) Erzeugen eines zweiten Vakuumniveaus mit der Evakuierungsanordnung in dem zu prüfenden Prüfraum des Prüflings, wobei das zweite Vakuumniveau höher ist als das erste Vakuumniveau;
   und
c) Prüfen des evakuierten Prüfraumes des Prüflings auf Dichtheit durch Analysieren der Bestandteile des Vakuums innerhalb des zu prüfenden Prüfraumes des Prüflings mit einem Quadrupol-Massenspektrometer, wobei eine Dichtheitsprüfung aufgrund eines Bestandteils oder der Bestandteile, deren Intensitätsveränderung, des oder deren Partialdrucks und / oder der zeitlichen Veränderung innerhalb des zu prüfenden Prüfraumes des Prüflings durchgeführt wird.

Durch das zuvor aufgezeigte Verfahren können feuchte und/oder nasse Prüflinge / Bauteile einer Dichtheitsprüfung zugeführt werden, wobei diese zunächst getrocknet und anschließend auf Dichtheit geprüft werden können.

Entsprechend erfolgt zunächst eine Abdichtung des zu prüfenden Prüfraumes, also beispielsweise wird ein Motorblock, der an diversen Stellen Ein- und Ausgänge, als auch Öffnungen für Zu- und Abführleitungen aufweist, verschlossen bzw. abgedichtet, so dass der Innenraum des Motorblocks durch die auf Dichtheit zu prüfende Wandung sowie die abdichtenden Abdichtungen von der Außenluft abgeschlossen ist. Auf diese Weise wird ein innerhalb des Prüflings befindlicher Prüfraum gebildet. Ferner kann bei Alurädern und dergleichen eine entsprechende Abdichtung gemäß der im Stand der Technik bekannten Dichtheitsprüfanordnungen erfolgen, so dass ebenfalls der Prüfraum ausgebildet wird, so dass eine Dichtheitsprüfung durch eine Bauteilwand erfolgen kann.

Nach Herstellung des Prüfraumes wird dann zunächst ein Vakuumniveau innerhalb des Prüfraumes erzeugt, das dazu dient, ein erstes Vakuum zu generieren mit Hilfe dessen die Feuchtigkeit bzw. die Flüssigkeit / Wasser aus dem Prüfraum des Prüflings und aus etwaigen vorhandenen Lecks in der Prüflingswandung entfernt wird, wobei hierzu das physikalische Prinzip genutzt wird, das Wasser und andere entsprechende Flüssigkeiten bei geringerem Druck schon bei geringeren Temperaturen von dem flüssigen in den gasförmigen Zustand übergeht bzw. übergehen und so verdampft bzw. verdampfen. Auf diese Weise wird in dem Schritt a) die vorhandene Flüssigkeit aus dem Prüfraum vollständig entfernt, wobei hierzu bedarfsweise eine Haltestufe für das erste Vakuumniveau vorgesehen werden kann, so dass auch größere Mengen von bis zu 10 ml oder sogar 20 ml und mehr problemlos entfernt werden können.

An dieser Stelle sei angemerkt, dass in der Regel die zu entfernende Flüssigkeit bekannt ist, so dass das Vakuumniveau entsprechend auf diese Flüssigkeit abgestimmt werden kann.

Unter Wasser bzw. Flüssigkeit im Sinne dieser Anmeldung sind beispielsweise normales Wasser (Leitungswasser), mit Reinigungsmittel versetztes Wasser, Reinigungsflüssigkeiten, und dergleichen sowie auch noch Schneidöle und dergleichen, aber auch pastenähnliche Substanzen zu verstehen, die ebenfalls bei geringeren Drücken anfangen zu sieden und letztendlich verdampfen können.

Bei der physikalischen Entfernung des Wassers bzw. der Flüssigkeit ist es zudem wichtig, dass das erste Vakuumniveau nicht zu hoch (niedriger Druck) ausfällt, da ansonsten aufgrund zu schneller Umwandlung und zu geringer Energie bzw. Temperatur, die das Wasser / Flüssigkeit unter anderem aus dem Prüfling selbst entzieht, um zu verdampfen, die Flüssigkeit / das Wasser fest werden, also sich Eis bilden könnte. Dieses feste Wasser bzw. die Flüssigkeit könnte dann nicht so einfach entfernt werden. Daher könnte bei Bedarf optional eine entsprechende Haltestufe bei der Vakuumerzeugung eingebaut werden. Alternativ oder auch zusätzlich kann auch eine Bauteil- bzw. Prüflingserwärmung durch Wärmezufuhr erfolgen.

Welche Menge an Flüssigkeit bzw. an Wasser entfernt werden kann, ist insbesondere von den folgenden Größen abhängig, nämlich Temperatur des Bauteils bzw. des Prüflings, Umgebungstemperatur, etwaig zusätzlich vorgesehene Wärmezuführung, die Leckrate, die Taktzeit, Material des Prüflings, wobei hier dessen Wärmeleitfähigkeit entscheidend ist, und letztendlich noch weiterhin von der tatsächlichen Wasser- bzw. Flüssigkeitsverteilung innerhalb des Bauteils, nämlich pfützig oder flächig.

Zur Sicherstellung, dass der Prüfraum des Prüflings trocken ist, kann das erste Vakuumniveau solange bei dem Verdampfungsdruck von Wasser gehalten werden, wobei hier natürlich die vorhandene Energie bzw. Temperatur berücksichtigt wird, die sich über die Dampfdruckkurve des Wasser ergibt, also beispielsweise bei einer Bauteiltemperatur und Umgebungstemperatur von ca. 20°C würde das Wasser bei einem Luftdruck bzw. Vakuumniveau zwischen 30 und 20 mbar beginnen zu sieden. Das verdampfte Wasser wird dann über die Vakuumanordnung entfernt, so dass nach einer kurzen Zeit das Bauteil innerhalb des Prüfraums getrocknet ist und etwaig vorhandene Lecks frei von Flüssigkeitsverblockungen sind und auf diese Weise diese Lecks erst detektierbar werden.

Da die Atmosphäre quasi als Testgas fungiert und der Außenbereich des Prüflings dieser Atmosphäre ausgesetzt ist, können durch etwaig vorhandene Lecks in der Wandung des Prüfraums Bestandteile der Atmosphäre auf Grund der Druckdifferenz durchwandern, wobei diese dann detektiert werden müssen. Als Vorteil ergibt sich so weiter, dass es keines weiteren Testgases mehr bedarf, da das erfindungsgemäß zu verwendende Quadrupol-Massenspektrometer einzelne oder auch alle Bestandteile der Atmosphäre detektieren kann.

Bereits die Detektion einzelner Bestandteile der Atmosphäre innerhalb des Prüfraumes reichen aus, um die Dichtheit des Prüflings in Schritt c) zu verneinen.

Das erste Vakuumniveau kann in einer besonders bevorzugten Ausführungsform im Bereich von 40 mbar bis zu 1 mbar gehalten werden, wobei die Höhe des Vakuumniveaus in Abhängigkeit von dem / der zu entfernenden Wassers / Flüssigkeit und / oder Feuchtigkeit ist, so dass ein entsprechendes Verdampfen erfolgen kann.

Das zweite Vakuumniveau kann insbesondere als Feinvakuum oder Hochvakuum ausgebildet werden, so dass das Quadrupol-Massenspektrometer direkt in den Prüfraum hineinmessen kann.

Zur weiteren Verbesserung kann es vorteilhaft sein, dass eine Vorprüfung auf ein Grobleck während des Schrittes a) und / oder b) innerhalb des zu prüfenden Prüflings durchgeführt wird, wobei eine Vakuummessung oder zeitliche Vakuummessung durchgeführt wird und:
- bei Erreichen eines vorgegebenen Vakuumniveaus mit Schritt ii) fortgefahren wird oder
- bei Nichterreichen des vorgegebenen Vakuumniveaus als nicht-in-Ordnung / NIO gekennzeichnet wird und das Verfahren mit diesem Prüfling beendet wird.

Hierdurch werden Groblecks erkannt und bei entsprechender Anwendung in einer Reihenprüfung die nicht in Ordnung-Teile schnellstmöglich aus der Prüfung entfernt, da diese bereits schon über ein nicht akzeptables Grobleck verfügen. Dieses Prüfen auf ein Grobleck kann beispielsweise mit Drucksensoren erfolgen.

Bei einem Leck im Prüfling bewegen sich die Luftmoleküle sehr schnell durch eine Übergangsströmung zwischen turbulenter Strömung, Knudsen-Strömung und / oder molekularer Strömung bis zu einem dem Quadrupol-Massenspektrometer vorgeschalteten Einlasssystem, Feinvakuum- bzw. Hochvakuumeinlass, wobei sie sich dann über eine molekulare Strömung bis zu dem Quadrupol-Massenspektrometer bewegen, und instantan vom Quadrupol-Massenspektrometer nachgewiesen werden können.

Zur besseren Entfernung des Wassers, Flüssigkeit und / oder der Feuchtigkeit kann der Prüfling erwärmt werden. Es sei angemerkt, dass die Flüssigkeit, um die es in der Regel geht, Wasser sein wird.

Alternativ kann die Haltestufe des ersten Vakuumniveaus angepasst werden, wobei hierzu entweder empirische Daten verwendet werden oder aber die Dauer des ersten Vakuumniveaus mittels einer Messung auf Wasser bzw. Wasserdampf innerhalb des Prüfraumes angepasst wird.

Mit der Evakuierungsanordnung können effektiv Leckverblockungen in Lecks des Prüflings durch Wasser, Flüssigkeit und / oder Feuchtigkeit im Prüfling entfernt werden. Hierdurch kann ein durch Flüssigkeiten verblocktes Leck detektiert werden und ein späteres Öffnen des Lecks somit ausgeschlossen werden. Bei Verwendung des Prüflings während des Betriebes kann es somit nicht mehr zu einem Schaden im Bauteil kommen, der auf Grund eines Kleinstlecks entstanden wäre.

Das erfindungsgemäße Dichtheitsprüfverfahren koppelt auf diese Weise ein Vakuumreinigungs- und Trocknungsverfahren mit einer empfindlichen Dichtheitsprüfmethode und erlaubt Messungen von Leckraten der Leckagen, die durch eine üblicherweise zu erwartende Verblockung nicht mehr detektierbar wären.

Beide Prozesse, nämlich Entfernung der möglichen Leckverblockungen sowie Vakuumerzeugung sind miteinander verbunden und laufen gleichzeitig ab, wobei der Prüfling für die Entfernung der Leckverblockung und für die Dichtheitsprüfung evakuiert wird.

Das Verfahren zur Dichtheitsprüfung arbeitet im Bereich, in dem oftmals Druckdifferenzverfahren eingesetzt werden. Die Druckdifferenzverfahren sind temperaturempfindlich und können bei großen Volumina und kleinen Lecks nicht mehr arbeiten, was jedoch von dem hier beschriebenen Verfahren ermöglicht wird.

Besonders bevorzugt umfasst die Analyse durch das Quadrupol-Massenspektrometer die zeitliche Auswertung und / oder Intensitätsveränderungen.

In einer Konkretisierung kann das zweite Vakuumniveau von einem zweiten Drucksensor detektiert und überprüft werden, wobei bei Erreichen des zweiten Vakuumniveaus der Zugang zum Quadrupol-Massenspektrometer über den Feinvakuum- bzw. Hochvakuumeinlass freigegeben wird.

Somit ist es möglich, die atmosphärische Luft außerhalb des Prüflings quasi als Testgas zu verwenden und im Prüfling ein Vakuum zu erzeugen. In diesem Vakuum werden nunmehr Bestandteile der atmosphärischen Luft durch das Quadrupol-Massenspektrometer im Feinvakuum bzw. Hochvakuum nachgewiesen. Sind Bestandteile der atmosphärischen Luft im Vakuum nachweisbar, müssen diese durch ein Leck im Prüfling eingetreten sein. Die Dichtheitsprüfanordnung arbeitet hierbei temperaturunabhängig und sehr schnell auch bei großen Prüflingsvolumina. Ferner ist eine Testgasverseuchung vollständig ausgeschlossen, da nur mit atmosphärischer Luft als Prüfgas gearbeitet wird.

Es wird durch das Erzeugen von dem Vakuum eine Verblockung von Leckagen durch Flüssigkeiten grundlegend für das Dichtheitsprüfverfahren verhindert, da Flüssigkeiten in den Lecks durch ihren höheren Dampfdruck verdampfen und somit die Lecks nicht weiter verblocken.

Das Dichtheitsprüfverfahren arbeitet mit einer Druckdifferenz von atmosphärischem Druck von etwa 1 bar, wobei gerade auf ein zusätzliches Testgassystem mit entsprechender Druckbeaufschlagung verzichtet werden kann.

Es wird mittels eines Quadrupol-Massenspektrometers eine Spektrumsanalyse durchgeführt, wobei detektiert wird, ob durch ein Leck, also ein kleines Leck, denn Großlecks können bereits in einem ersten Schritt über eine Vakuumkontrollmessung detektiert werden, atmosphärische Luft in den Prüfraum des Prüflings eintritt.

Zudem ist es möglich die möglicherweise vorhandenen Leckverblockungen durch Flüssigkeiten während des Evakuierungsprozesses nahezu vollständig zu entfernen. Weiter ist eine Kontrolle der Prüflingsreinigung durch eine massenspektroskopische Gasanalyse ebenfalls möglich.

Unter Umständen kann zusätzlich vor der Prüfung des Prüflings ein Erwärmen des Prüflings erfolgen, um die Flüssigkeiten schneller und leichter zu entfernen, da so mehr Energie, also die Temperatur des Prüflings wäre höher als die Umgebungstemperatur, zum Verdampfen des Wassers / Flüssigkeit zur Verfügung stände. Je nach Anforderungen, z. B. Größe der Lecks und Stofflichkeit der Prüflingskontaminierung, z. B. durch Abdeckung der Lecks durch Flüssigkeiten, kann es auch notwendig sein, den Prüfling vor bzw. während des Test zu erwärmen um den Verdampfungsvorgang zu beschleunigen. Hierzu bieten sich entsprechende im Stand der Technik bekannte Wärmemittel, wie bspw. Heißluftgebläse oder Wärmelampen, an.

In einer weiteren Ausgestaltung kann die Prüfraum-Vakuumanordnung eine erste Evakuierungsanordnung zur Vakuumerzeugung und zur Entfernung einer möglichen Leckverblockung und / oder eine zweite Evakuierungsanordnung zur Vakuumerzeugung der Dichtheitsprüfung aufweisen, wobei steuerbare Ventile vorgesehen sind, um die erste und / oder zweite Evakuierungsanordnung von dem Prüfraum zu trennen oder mit diesem zu verbinden.

Da es notwendig ist, dass die Leckkanäle während der Prüfung von jeglicher Verunreinigung frei sein müssen, da ansonsten eine reproduzierbare und sichere Dichtheitsprüfung nicht erfolgen kann, ist es wichtig, dass eventuell vorgeschaltete Waschvorgänge einwandfrei durchgeführt werden.

Nachfolgend wird ein exemplarisches Ausführungsbeispiel der Erfindung beschrieben, wobei diese die Erfindung lediglich allgemein erläutern soll und nicht beschränkend zu werten ist. Der Fachmann ist in der Lage entsprechende im Stand der Technik übliche Abwandlungen durchzuführen:
Die Prüfling-Trocknungs- und Dichtheitsprüfanordnung umfasst eine Ablage-/Aufnahmefläche bzw. einen Bereich wo ein auf Dichtheit zu prüfendes Objekt, beispielsweise ein Strukturbauteil, eine Autofelge oder ein Aluminiumrad, ein Motorblock oder Fass und dergleichen, positioniert werden kann, um beispielsweise eine Wandung oder einen Hohlkörper auf Dichtheit zu testen, nämlich den hier bezeichneten Prüfraum, der durch eine Wandung begrenzt ist.

Zum Testen des Prüfraumes auf Dichtheit ist eine hier offenbarte Prüfraum-Vakuumanordnung vorgesehen. Die Prüfraum-Vakuumanordnung umfasst mehrere Druckleitungen sowie steuerbare Ventile, die entsprechend geschaltet werden können, um unterschiedliche Vakuumstufen innerhalb des Prüfraumes zu erzeugen oder um den Prüfraum zu belüften oder in diesen hineinzumessen.

Es ist wenigstens ein Drucksensor bzw. Druckmessgerät vorgesehen, der die Vakuumqualität, also die Höhe des erzeugten Vakuums kontrolliert und bedarfsweise auch dessen zeitlichen Verlauf erfassen kann. Das Druckmessgerät misst und überprüft also den erreichten Druck.

Weiter ist wenigstens eine Evakuierungsanordnung vorgesehen, die zur Erzeugung des Vakuums dient. Mittels dieser Evakuierungsanordnung und dem Verdunstungsprinzip bei niedrigen Drücken können mögliche Leckverblockungen entfernt werden, wozu ein erstes Vakuum einer ersten Qualität / Niveau erzeugt wird. Dieses erste Vakuumniveau kann zeitlich sehr schnell hergestellt werden, wodurch der Trocknungsvorgang kurzfristig begonnen wird.

Weiter kann nach dem Trocknungsvorgang die Evakuierungsanordnung oder weitere Evakuierungsanordnungen, wie andere Vakuumpumpen und Kombinationen von Vakuumpumpen, das Vakuum für die Dichtheitsprüfung weiter erhöhen, wodurch der Druck im Prüfraum noch weiter gesenkt wird.

Als nächstes wird ein aufschaltbares Sensorsystem umfassend ein Quadrupol-Massenspektrometer auf den Prüfraum losgelassen, so dass das Quadrupol-Massenspektrometer den Prüfrauminhalt detektiert.

Dazugehörig kann eine Vorpumpe zur Erhöhung des Vakuums vorgesehen sein. Ferner kann noch eine Turbopumpe vorgesehen werden, die in Kombination mit einem Feinvakuum- bzw. Hochvakuumeinlass zusammen arbeitet, um das Vakuum in ein Feinvakuum bzw. Hochvakuum zu überführen. Das aus dem Prüfraum stammende zu testende Gas bzw. Gasgemisch wird mit dem Quadrupol-Massenspektrometer analysiert und dabei wird der Partialdruck oder auch die Konzentration der bzw. des Gases bestimmt bzw. bedarfsweise auch dessen zeitlicher Verlauf bestimmt.

Nachfolgend wird das offenbarte Verfahren in einer detailliert Ausführungsvariante ergänzend beschrieben:
Im ersten Schritt öffnet ein Ventil der Evakuierungsanordnung zur Erzeugung eines Vakuums. Das Druckmessgerät, also beispielsweise ein Drucksensor, überprüft den erreichten Druck p und ist derart eingestellt, dass der nächste Verfahrensschritt nur freigegeben wird, wenn der Dampfdruck einer Flüssigkeit, die möglicherweise ein Leck in dem zu testenden Prüfling verblocken könnte, sicher unterschritten wurde. Hierzu kann es in Abhängigkeit des Bauteils und der möglicherweise ein Leck in diesem Bauteil verblockenden Flüssigkeit notwendig sein, den Prüfling bzw. das Bauteil vorab ergänzend zu erwärmen. Durch das Erwärmen wird die möglicherweise ein Leck in diesem Bauteil verblockende Flüssigkeit leichter durch das zunächst erzeugte Vakuum entfernt, so dass das Leck auch detektiert werden kann.

Im folgenden Verfahrensschritt wird das Ventil der zweiten Evakuierungsanordnung geöffnet und erzeugt ein erstes Vakuumniveau < 1mbar im Prüfling, so dass das Quadrupol-Massenspektrometer mit Feinvakuum- bzw. Hochvakuumeinlass in das Bauteil hineinmessen kann und so die Vakuum-Gas-Zusammensetzung detektieren kann.

In einem üblichen und im Stand der Technik bekannten Verfahren müsste außerhalb des Prüflings ein Testgas, wie z.B. Helium, vorgehalten werden und das Quadrupol-Massenspektrometer würde nach dem Testgas Helium suchen. Im dargestellten Verfahren ist das Quadrupol-Massenspektrometer auf die atmosphärische Luft kalibriert und hat damit einen Fingerabdruck der vorhandenen Gase in der Umgebung als Referenz, kann aber auch nur auf einzelne Bestandteile der Luft kalibriert werden.

Mit einem kalibrierten Leck kann das Quadrupol-Massenspektrometer derart eingestellt werden, dass ab einem definierten Signal das Quadrupol-Massenspektrometer und die daran angeschlossene Auswerteinheit auf Undichtigkeit entscheiden kann. Hierbei können mehrere Gasarten gleichzeitig durch das Quadrupol-Massenspektrometer gesucht werden, wodurch die Messsicherheit und Prüfempfindlichkeit der Prüfling-Trocknungs- und Dichtheitsprüfanordnung entscheidend erhöht wird.

Das Quadrupol-Massenspektrometer kann aufgrund der lonisationsprozesse nur im Feinvakuum bzw. Hochvakuum arbeiten und daher ist als relevanter Baustein der Einlass ins Feinvakuum bzw. Hochvakuum vorgesehen, wobei dieser auch durch eine entsprechende Vakuumanordnung realisiert werden kann oder bereits in dem Quadrupol-Massenspektrometer-Messgerät integriert sein kann.

Das Druckmessgerät, beispielsweise ein Drucksensor, überprüft im ersten Evakuierungsschritt mittels der Evakuierungsanordnung als auch in dem zweiten Evakuierungsschritt jeweils den erreichten Druck bzw. Vakuum. Wird ein Zielvakuumdruck nicht erreicht, so entscheidet die Prüfling-Trocknungs- und Dichtheitsprüfanordnung, dass ein Grobleck in dem Prüfling vorhanden ist und gibt den Status für den Prüfling mit nicht-in-Ordnung (NIO) aus.

Die Prüfling-Trocknungs- und Dichtheitsprüfanordnung wird derart eingestellt, dass bei groben Leckagen das steuerbare Ventil zum Quadrupol-Massenspektrometer nicht geöffnet wird, sondern bereits frühzeitig der Prüfling auf NIO gesetzt und das Verfahren abgekürzt wird.

Wird bei den ersten Evakuierungen durch die Evakuierungsanordnung kein Grobleck detektiert, so öffnet erst im Anschluss ein Ventil, so dass eine Verbindung der Hauptleitung mit dem Einlass in das Feinvakuum bzw. Hochvakuum des Quadrupol-Massenspektrometers hergestellt wird, so dass das Quadrupol-Massenspektrometer in den Prüfraum hineinmessen kann. Hierbei wird sich das Signal eines Lecks in Form von Luftmolekülen sehr schnell durch eine Übergangsströmung zwischen turbolenter Strömung, Knudsen-Strömung und molekularer Strömung bis zum Feinvakuum- bzw. Hochvakuumeinlass bewegen. Hinter dem Feinvakuum- bzw. Hochvakuumeinlass bewegen sich die Moleküle dann in Molekularströmung weiter und werden fast instantan im Quadrupol-Massenspektrometer nachgewiesen.

Die eintretenden als auch die vorhandenen Luftmoleküle werden ionisiert und durch ein periodisch veränderliches Hochfrequenzfeld im Quadrupol-Massenspektrometer auf Bahnen gelenkt, die abhängig sind von dem Quotienten aus Ladung und Masse des Ions. Damit können die verschiedenen Molekülarten getrennt werden und der Strom der einzelnen ionisierten Moleküle kann nachgewiesen werden. Das Gerät kann daher nachweisen, ob ein Medium, in diesem Fall die Umgebungsluft, außerhalb des Prüflings in kleinsten Mengen durch ein Leck in das Vakuum des Prüflings eingedrungen ist.

Abschließend wird der Prüfling durch öffnen einer Belüftung belüftet und die Prüfling-Trocknungs- und Dichtheitsprüfanordnung kann den nächsten Prüfling untersuchen.

Das Dichtheitsprüfverfahren kann in Abhängigkeit der Prüflingsvolumina durch Verwendung von groß dimensionierten Vakuumpumpen sehr schnell ablaufen. Das reine Messen mit dem Quadrupol-Massenspektrometer benötigt aufgrund des physikalischen Effektes der Knudsen- und Molekularströmung nur wenige Sekunden, so dass auf diese Weise ein hocheffizientes Dichtheitsprüfverfahren angegeben ist, welches insbesondere unabhängig von einem speziellen Testgas betrieben werden kann und gleichzeitig die Trocknung ermöglicht.

## Patentansprüche

1. Prüfling-Trocknungs- und Dichtheitsprüfverfahren wenigstens eines nassen und / oder feuchten Prüflings, wobei
- für die Dichtheitsprüfung auf die Verwendung eines speziellen Testgases verzichtet wird,
- die Dichtheitsprüfung unter Umgebungsatmosphäre durchgeführt wird,
und
nach dem Abdichten des zu trocknenden und auf Dichtheit zu prüfenden Prüfraumes des Prüflings wenigstens folgende Schritte durchgeführt werden:
a) Erzeugen eines ersten Vakuumniveaus in dem zu prüfenden Prüfraum des Prüflings mit einer Evakuierungsanordnung
und
Halten dieses ersten Vakuumniveaus bei dem Verdampfungsdruck von Wasser oder einer zu entfernenden Flüssigkeit, so dass sich das in dem Prüfraum des zu prüfenden Prüflings befindende Wasser, Flüssigkeit und / oder Feuchtigkeit aufgrund des geringeren Druckes innerhalb des Prüfraumes verdampft und durch die Evakuierungsanordnung entfernt wird;
b) Erzeugen eines zweiten Vakuumniveaus mit der Evakuierungsanordnung in dem zu prüfenden Prüfraum des Prüflings, wobei das zweite Vakuumniveau höher ist als das erste Vakuumniveau;
und
c) Prüfen des evakuierten Prüfraumes des Prüflings auf Dichtheit durch Analysieren der Bestandteile des Vakuums innerhalb des zu prüfenden Prüfraumes des Prüflings mit einem Quadrupol-Massenspektrometer, wobei eine Dichtheitsprüfung aufgrund eines Bestandteils oder der Bestandteile, deren Intensitätsveränderung, des oder deren Partialdrucks und / oder der zeitlichen Veränderung innerhalb des zu prüfenden Prüfraumes des Prüflings durchgeführt wird.

2. Prüfling-Trocknungs- und Dichtheitsprüfverfahren nach Anspruch 1,
**dadurch gekennzeichnet, dass**
das erste Vakuumniveau im Bereich von 40 mbar bis zu 1 mbar gehalten wird, wobei die Höhe des Vakuumniveaus in Abhängigkeit von dem / der zu entfernenden Wassers / Flüssigkeit und / oder Feuchtigkeit ist, so dass ein entsprechendes Verdampfen erfolgen kann.

3. Prüfling-Trocknungs- und Dichtheitsprüfverfahren nach Anspruch 1 oder 2,
**dadurch gekennzeichnet, dass**
das zweite Vakuumniveau als Feinvakuum oder als Hochvakuum ausgebildet wird.

4. Prüfling-Trocknungs- und Dichtheitsprüfverfahren nach Anspruch 1, 2 oder 3,
**dadurch gekennzeichnet, dass**
zur Vorprüfung auf ein Grobleck während des Schrittes a) und / oder b) innerhalb des zu prüfenden Prüflings
eine Vakuummessung oder zeitliche Vakuummessung durchgeführt wird und:
- bei Erreichen eines vorgegebenen Vakuumniveaus mit Schritt b) fortgefahren wird oder
- bei Nichterreichen des vorgegebenen Vakuumniveaus als nicht-in-Ordnung / NIO gekennzeichnet wird und das Verfahren mit diesem Prüfling beendet wird.

5. Prüfling-Trocknungs- und Dichtheitsprüfverfahren nach einem der Ansprüche 1 bis 4,
**dadurch gekennzeichnet, dass**
zur besseren Entfernung des Wassers, Flüssigkeit und / oder der Feuchtigkeit der Prüfling erwärmt wird.

## Claims

1. A test-specimen drying and leak testing method for at least one wet and/or moist test specimen, wherein
- the use of a special test gas is dispensed with for the leak test,
- the leak test is carried out under the surrounding atmosphere,
and
once the test space, which is to be dried and to be tested for tightness, of the test specimen has been sealed off, at least the following steps are carried out:
a) generating a first vacuum level in the test space, which is to be tested, of the test specimen, with an evacuation arrangement
and
keeping this first vacuum level at the evaporation pressure of water or a liquid which is to be removed, so that the water, liquid and/or moisture located in the test space of the test specimen to be tested is evaporated due to the lower pressure within the test space and is removed by the evacuation arrangement;
b) generating a second vacuum level with the evacuation arrangement in the test space, which is to be tested, of the test specimen, the second vacuum level being higher than the first vacuum level;
and
c) testing the evacuated test space of the test specimen for tightness by analysing the constituents of the vacuum within the test space, which is to be tested, of the test specimen, with a quadrupole mass spectrometer, with a leak test being carried out on the basis of a constituent or the constituents, the change in intensity thereof, the partial pressure or the partial pressure thereof, and/or the change over time within the test space, which is to be tested, of the test specimen.

2. A test-specimen drying and leak testing method according to Claim 1, **characterised in that**
the first vacuum level is kept in the range of 40 mbar up to 1 mbar, the height of the vacuum level being dependent on the water / liquid and/or moisture which is to be removed, so that corresponding evaporation can take place.

3. A test-specimen drying and leak testing method according to Claim 1 or 2,
**characterised in that**
the second vacuum level is designed as a fine vacuum or as a high vacuum.

4. A test-specimen drying and leak testing method according to Claim 1, 2 or 3,
**characterised in that**
for preliminary testing for a major leak during step a) and/or b) within the test specimen which is to be tested
a vacuum measurement or vacuum measurement over time is carried out and:
- if a predetermined vacuum level is reached, step b) is continued
or
- if the predetermined vacuum level is not reached, is marked as "not okay" / NOK and the method is ended with this test specimen.

5. A test-specimen drying and leak testing method according to one of Claims 1 to 4,
**characterised in that**
the test specimen is heated for better removal of the water, liquid and/or the moisture.

## Revendications

1. Procédé de contrôle du séchage et de l'étanchéité d'échantillons d'au moins un échantillon humide et/ou mouillé, dans lequel
- on renonce à l'utilisation d'un gaz de test spécial pour le contrôle de l'étanchéité,
- on réalisé le contrôle de l'étanchéité sous atmosphère ambiante
et
après avoir scellé la chambre de contrôle de l'échantillon qui doit être séchée et dont l'étanchéité doit être contrôlée, les étapes suivantes au moins doivent être réalisées :
a) générer un premier niveau de vide dans la chambre de contrôle à contrôler de l'échantillon au moyen d'un dispositif d'évacuation
et
maintenir ce premier niveau de vide à la pression d'évaporation de l'eau ou d'un liquide à éliminer, de sorte que l'eau, le liquide et/ou l'humidité présents dans la chambre de contrôle de l'objet à contrôler s'évaporent en raison de la pression plus faible à l'intérieur de la chambre de contrôle et qu'ils soient éliminés par le dispositif d'évacuation ;
b) générer un deuxième niveau de vide avec le dispositif d'évacuation dans la chambre de contrôle à contrôler de l'échantillon, le deuxième niveau de vide étant supérieur au premier niveau de vide ;
et
c) contrôler l'étanchéité de la chambre de contrôle sous vide de l'échantillon en analysant les constituants du vide à l'intérieur de la chambre de contrôle à contrôler de l'échantillon à l'aide d'un spectromètre de masse quadripolaire, un contrôle de l'étanchéité étant effectué sur la base d'un ou de plusieurs constituants, de leur variation d'intensité, de leur pression partielle et/ou de la variation temporelle à l'intérieur de la chambre de contrôle à contrôler de l'échantillon.

2. Procédé de contrôle du séchage et de l'étanchéité d'échantillons selon la revendication 1,
**caractérisé en ce que**
le premier niveau de vide est maintenu dans la plage comprise entre 40 mbar et 1 mbar, le niveau du vide dépendant de l'eau / du liquide et/ou de l'humidité à éliminer, de sorte qu'une évaporation correspondante puisse avoir lieu.

3. Procédé de contrôle du séchage et de l'étanchéité d'échantillons selon la revendication 1 ou 2,
**caractérisé en ce que**
le deuxième niveau de vide est réalisé sous forme de vide poussé ou de vide très poussé.

4. Procédé de contrôle du séchage et de l'étanchéité d'échantillons selon la revendication 1, 2 ou 3,
**caractérisé en ce que**
pour le contrôle préliminaire d'une fuite grossière à l'intérieur de l'échantillon à contrôler au cours de l'étape a) et/ou b), on réalise une mesure du vide ou une mesure du vide temporel et :
- si un niveau de vide prédéterminé est atteint, le contrôle est poursuivi à l'étape b)
ou
- si le niveau de vide prédéterminé n'est pas atteint, il est marqué comme non conforme/ NIO et le procédé est arrêté avec cet échantillon.

5. Procédé de contrôle du séchage et de l'étanchéité d'échantillons selon l'une des revendications 1 à 4, **caractérisé en ce que**
l'échantillon est chauffé pour mieux éliminer l'eau, le liquide et/ou l'humidité.
